(19) Europäisches Patentamt
European Patent Office
Office européen des brevets

(11) **EP 4 137 607 A1**

(12) **EUROPEAN PATENT APPLICATION**

(43) Date of publication:
**22.02.2023 Bulletin 2023/08**

(51) International Patent Classification (IPC):
**C25B 1/04** *(2006.01)*     **C25B 15/08** *(2006.01)*

(21) Application number: **21020418.6**

(52) Cooperative Patent Classification (CPC):
**C25B 1/04; C25B 15/085; C25B 15/087**

(22) Date of filing: **17.08.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(72) Inventors:
• **Tadiello, Jean-Philippe**
**60439 Frankfurt am Main (DE)**
• **Nesselberger, Markus**
**60439 Frankfurt am Main (DE)**
• **Svitnic, Tibor**
**39114 Magdeburg (DE)**

(74) Representative: **Stang, Stefan**
**Air Liquide Forschung und Entwicklung GmbH**
**Gwinnerstraße 27-33**
**60388 Frankfurt am Main (DE)**

(71) Applicant: **L'Air Liquide Société Anonyme pour l'Etude et**
**l'Exploitation des Procédés Georges Claude**
**75321 Paris (FR)**

(54) **ELECTROLYSIS ARRANGEMENT AND METHOD WITH ANOLYTE COOLER**

(57) The invention relates to an electrolysis arrangement and a method for producing hydrogen and oxygen by electrolysis of an aqueous electrolysis medium, in particular a corrosive electrolysis medium. According to the invention, the electrolyte cooler to maintain the desired operating temperature of the electrolysis cell stack is arranged downstream of the electrolysis cell stack and upstream of the anolyte gas-liquid separator. By this arrangement, less corrosion resistant materials can be used in particular on the anode side of the electrolysis arrangement, since conduits and further components on the anode side of the electrolysis arrangement are exposed to lower temperatures.

Fig. 1

EP 4 137 607 A1

**Description**

**Technical field**

The invention relates to an electrolysis arrangement for performing electrolysis in an industrial scale. The invention further relates to a method for producing hydrogen and oxygen by electrolysis in an industrial scale.

**Background art**

In industrial electrolysis applications, electrolysis media are often used that are corrosive to the components of the electrolyser and the piping system. Metal components are particularly affected. Alkaline electrolysis is well established technology and uses a concentrated lye solution as the electrolyte. Since the conductivity of the electrolyte and the catalyst activity of the electrodes, and therefore the efficiency of the electrolyser, increase with the temperature, it becomes more usual to operate the alkaline water electrolyser at higher temperatures, as long as the electrolyser components are not subject to degradation. This leads to the requirement of corrosion resistant materials, in particular corrosion resistant metals and alloys.

The highest corrosion occurs on the anode side of the electrolyser, as high concentrations of oxygen increase the corrosion.

The heat exchanger removing the heat generated in the electrolysis cell stack of the electrolyser is usually installed downstream of the gas-liquid separators employed to separate the generated hydrogen and oxygen gas from the electrolysis medium. In such arrangements, most of the equipment is exposed to a high temperature electrolysis medium, in particular concentrated lye solution in alkaline electrolysis, consequently having high corrosion rates. This applies due to the exposure to oxygen in particular to the piping system between the electrolysis cell stack and the anode gas-liquid separator, as well as to the anode gas-liquid separator itself.

Hence, in particular for the equipment used at the anode side of the electrolysis arrangement, with temperature going up to 90 °C, corrosion resistant materials such as pure Nickel needs to be used, which increases the capital expenditures of the electrolysis system. Furthermore, the release of Nickel ions into the electrolysis medium pollutes the electrolyser and may increase the rate of electrolysis cell stack performance degradation.

**Disclosure of the invention**

It is an general object of the present invention to provide an electrolysis arrangement which at least in part overcomes the problems of the prior art.

It is a further object of the present invention to provide an alkaline electrolysis arrangement system which at least in part overcomes the problems of the prior art.

It is a further object of the present invention to provide an electrolysis arrangement with components and piping which are subject to lower requirements in terms of corrosion resistance.

It is a further object of the present invention to provide an electrolysis arrangement, in particular an alkaline electrolysis arrangement, which requires fewer components and piping that are made of a pure Nickel material.

It is a further object of the present invention to provide an electrolysis arrangement which requires fewer components and piping on the anode side of the electrolysis arrangement that are highly resistant to corrosive media.

It is a further object of the present invention to provide an electrolysis arrangement, in particular an alkaline electrolysis arrangement, which requires fewer components and piping on the anode side of the electrolysis arrangement that are made of a pure Nickel material.

It is a further object of the present invention to provide a method which at least partially solves at least one of the aforementioned problems.

A contribution to the at least partial solution of at least one of the above mentioned objects is provided by the subject-matter of the independent claims. The dependent claims provide preferred embodiments which contribute to the at least partial solution of at least one of the objects. Preferred embodiments of elements of a category according to the invention shall, if applicable, also be preferred for components of same or corresponding elements of a respective other category according to the invention.

The terms "having", "comprising" or "containing" etc. do not exclude the possibility that further elements, ingredients etc. may be comprised. The indefinite article "a" or "an" does not exclude that a plurality may be present.

In general, at least one of the underlying problems is at least partially solved by an electrolysis arrangement, comprising

- an electrolysis cell stack comprising a plurality of electrolysis cells for the electrochemical generation of hydrogen and oxygen from an electrolysis medium, wherein the electrolysis cell stack comprises an anode section for the generation of oxygen and a cathode section for the generation of hydrogen;

- an anolyte gas-liquid separator for the separation of oxygen gas from an oxygen loaded anolyte portion of the electrolysis medium;
- a catholyte gas-liquid separator for the separation of hydrogen gas from a hydrogen loaded catholyte portion of the electrolysis medium;
- an anolyte cooler, wherein said anolyte cooler is arranged downstream of the electrolysis cell stack and upstream of the anolyte gas-liquid separator, in order to cool the oxygen loaded anolyte portion of the electrolysis medium before it enters the anolyte gas-liquid separator.

According to the invention, the cooler for the electrolysis medium heated in the electrolysis cell stack is arranged on the anode side of the electrolysis arrangement and cools the oxygen loaded anolyte portion of the electrolysis medium, hence referred to as anolyte cooler. In particular, the cooler is arranged downstream of the electrolysis cell stack and upstream of the anolyte gas-liquid separator. That is, the anolyte cooler is arranged between the electrolysis cell stack and the anolyte gas-liquid separator.

In one embodiment, the electrolysis medium is a corrosive electrolysis medium. In particular, the electrolysis medium is an corrosive electrolysis medium which is corrosive to metals and/or metal alloys.

According to the invention, the fact is used that corrosion is reduced at lower temperatures. Corrosion is furthermore highest when equipment or a pipe is exposed to high temperatures, such as 90 °C, and furthermore to oxygen. By arranging the electrolyte cooler between the electrolysis cell stack and the anolyte gas-liquid separator, the corrosion rate is reduced on the most susceptible pieces of equipment, that is piping downstream of the anode section of the electrolysis cell stack and the anolyte gas-liquid separator itself.

According to one embodiment, the anolyte cooler is arranged directly at or proximately to the outlet of the anode section of the electrolysis cell stack.

By arranging the anolyte cooler directly at or proximately to the outlet of the anode section of the electrolysis cell stack, only a small piece of piping between the electrolysis cell stack and the anolyte cooler or no piping at all is exposed to the high temperature anolyte withdrawn from the electrolysis cell stack. Hence, most of the piping between the electrolysis cell stack and the anolyte gas-liquid separator, which is the piping between the anolyte cooler and the anolyte gas-liquid separator, can be made of a material which is less resistant to corrosion because it is exposed to lower temperatures.

According to one embodiment, the electrolysis medium is an aqueous medium, in particular an aqueous alkaline medium, in particular an aqueous concentrated potassium hydroxide (KOH) solution with a KOH concentration of up to 30 wt.-%, or up to 35 wt.-%, or up to 40 wt.-%.

According to one embodiment, the anolyte cooler is arranged within a first piping system, wherein the first piping system connects an outlet of the anode section of the electrolysis cell stack and an inlet of the anolyte gas-liquid separator.

That is, the first piping system is configured to supply the oxygen loaded anolyte withdrawn from the anode section of the electrolysis cell stack to the inlet of the anolyte gas-liquid separator. The anolyte cooler is arranged within the first piping system. That is, the inlet of the anolyte cooler is connected to an outlet of the anode section of the electrolysis cell stack and the outlet of the anolyte cooler is connected to an inlet of the anolyte gas-liquid separator.

According to one embodiment, the electrolysis arrangement comprises a second piping system, wherein the second piping system connects an outlet of the anolyte gas-liquid separator and an outlet of the catholyte gas-liquid separator with an inlet of the electrolysis cell stack, in order to withdraw hydrogen depleted catholyte from the catholyte gas-liquid separator and to withdraw oxygen depleted anolyte from the anolyte gas-liquid separator, and to supply the hydrogen depleted catholyte and the oxygen depleted anolyte to the electrolysis cell stack.

The second piping system connects both the anode gas-liquid separator and the cathode gas-liquid separator with an inlet of the electrolysis cell stack. In the gas-liquid separators, hydrogen and oxygen gas are separated from the hydrogen and oxygen loaded electrolysis medium withdrawn from the electrolysis cell stack and supplied to the gas-liquid separators. The resulting hydrogen and oxygen depleted electrolysis medium is withdrawn from the gas-liquid separators and supplied via the second piping system to an inlet of the electrolysis cell stack. The oxygen depleted anolyte and the hydrogen depleted catholyte usually contain residual dissolved hydrogen and/or oxygen. The oxygen depleted anolyte and the hydrogen depleted catholyte are supplied to the electrolysis cell stack either separated, partially mixed or fully mixed.

Therefore, according to one embodiment, the second piping system comprises a mixing device arranged downstream of the anolyte gas-liquid separator and downstream of the catholyte gas-liquid separator, in order to at least partially mix the hydrogen depleted catholyte and the oxygen depleted anolyte to obtain a mixed hydrogen and oxygen depleted electrolyte, to supply the mixed hydrogen and oxygen depleted electrolyte to the inlet of the electrolysis cell stack.

Before entering the electrolysis cell stack, the oxygen and hydrogen depleted electrolyte may be split, wherein a portion enters the electrolysis cell stack via an inlet at the anode section and a portion enters the electrolysis cell stack via an inlet at the cathode section.

According to one embodiment, no cooling device is arranged within the second piping system.

It was surprisingly found that cooling of the oxygen loaded anolyte by means of the anolyte cooler alone is sufficient to keep the temperatures of the electrolysis system within the target temperatures. According to one exemplary embodiment, when the electrolysis cell stack is operated at a set point temperature of 90 °C, it is sufficient to cool the oxygen loaded anolyte withdrawn from the anode section of the electrolysis cell stack to 60 °C. After separating the oxygen gas from the cooled loaded anolyte, it may be fully mixed with uncooled catholyte withdrawn from the catholyte gas-liquid separator. The resulting mixed electrolyte has a temperature of 75 °C, which is low enough that it can be recycled to the electrolysis cell stack for renewed generation of hydrogen and oxygen.

According to one further embodiment, when the second piping system comprises a mixing device arranged downstream of the anolyte gas-liquid separator and downstream of the catholyte gas-liquid separator, and for the aforementioned reasons, no cooling device is arranged within the second piping system downstream of the mixing device and upstream of the inlet of the electrolysis cell stack.

According to one embodiment, the electrolysis arrangement comprises a third piping system, wherein the third piping system connects an outlet of the cathode section of the electrolysis cell stack and an inlet of the catholyte gas-liquid separator.

According to one further embodiment, and for the aforementioned reasons, no cooling device is arranged within the third piping system.

According to one embodiment, and for the aforementioned reasons, the anolyte cooler arranged downstream of the electrolysis cell stack and upstream of the anolyte gas-liquid separator is the only cooler of the electrolysis arrangement to cool the electrolysis medium. That is, the anolyte cooler arranged downstream of the electrolysis cell stack and upstream of the anolyte gas-liquid separator is the only cooler of the electrolysis arrangement, and no further cooler is present to cool anolyte and/or catholyte and/or mixed electrolyte.

According to one embodiment, the part of the first piping system connecting an outlet of the anolyte cooler with the inlet of the anolyte gas-liquid separator is made of a stainless steel material.

Since the section of the first piping system connecting the outlet of the anolyte cooler and the inlet of the anolyte gas-liquid separator is exposed to the oxygen loaded anolyte at lower temperatures, for instance 60 °C, it is possible to produce this part of the first piping system from stainless steel. This is in particular true when the electrolysis arrangement is configured for performing an alkaline electrolysis. According to such an embodiment, the electrolysis medium is an aqueous alkaline medium, in particular an aqueous concentrated potassium hydroxide (KOH) solution with a KOH concentration of up to 30 wt.-%, or up to 35 wt.-%, or up to 40 wt.-%.

According to one embodiment and for the aforementioned reasons, the part of the first piping system connecting an outlet of the anolyte cooler with the inlet of the anolyte gas-liquid separator is not made of a Nickel containing material. In particular, the part of the first piping system connecting an outlet of the anolyte cooler with the inlet of the anolyte gas-liquid separator is not made of a pure Nickel material, in particular a Nickel material containing 99 wt.-% or more Nickel.

According to one embodiment, a housing of the anolyte gas-liquid separator is made of a stainless steel material.

As the oxygen loaded anolyte is supplied to the anolyte gas-liquid separator at lower temperatures due to the downstream arranged anolyte cooler, the housing and optionally further parts of the anolyte gas-liquid separator is also exposed to the oxygen loaded anolyte at lower temperatures, for instance 60 °C or less. Hence, it is possible to produce the housing and optionally further parts of the anolyte gas-liquid separator from stainless steel. This is in particular true when the electrolysis arrangement is configured for performing an alkaline electrolysis. According to such an embodiment, the electrolysis medium is an aqueous alkaline medium, in particular an aqueous concentrated potassium hydroxide (KOH) solution with a KOH concentration of up to 30 wt.-%, or up to 35 wt.-%, or up to 40 wt.-%.

According to one embodiment and for the aforementioned reasons, the housing of the anolyte gas-liquid separator and optionally further parts of the anolyte gas-liquid separator is/are not made of a Nickel containing material. In particular, the housing of the anolyte gas-liquid separator and optionally further parts of the anolyte gas-liquid separator is/are not made of a pure Nickel material, in particular a Nickel material containing 99 wt.-% or more Nickel.

According to one embodiment, the second piping system as a whole is made of a stainless steel material.

The second piping system is exposed to pre-cooled oxygen depleted anolyte withdrawn from the anolyte gas-liquid separator, uncooled hydrogen depleted catholyte withdrawn from the catholyte gas-liquid separator and optionally to a mixture of the aforementioned, in case the second piping system comprises a mixing device. Hence, as the second piping system is not exposed to hot oxygen containing electrolyte, it is due to the inventive electrolysis arrangement possible to produce the second piping system as a whole from a stainless steel material.

According to one further embodiment and for the aforementioned reasons, the second piping system as a whole is not made of a Nickel containing material. In particular, the second piping system as a whole is not made of a pure Nickel material, in particular a Nickel material containing 99 wt.-% or more Nickel.

Furthermore and in general, at least one of the underlying aforementioned problems is at least partially solved by a method for producing hydrogen and oxygen by electrolysis of an electrolysis medium, the method comprising the method steps of

- electrochemical splitting of water by means of an electrolysis cell stack, whereby a hydrogen loaded catholyte withdrawn from a cathode section of the electrolysis cell stack and an oxygen loaded anolyte withdrawn from an anode section of the electrolysis cell stack is obtained;
- supplying the hydrogen loaded catholyte to a catholyte gas-liquid separator to separate hydrogen from the hydrogen loaded catholyte, whereby hydrogen gas and a hydrogen depleted catholyte is obtained;
- supplying the oxygen loaded anolyte to an anolyte gas-liquid separator to separate oxygen from the oxygen loaded anolyte, whereby oxygen gas and an oxygen depleted anolyte is obtained;
- withdrawing the hydrogen depleted catholyte from the catholyte gas-liquid separator and recycling the hydrogen depleted catholyte to the cathode section of the electrolysis cell stack;
- withdrawing the oxygen depleted anolyte from the anolyte gas-liquid separator and recycling the oxygen depleted anolyte to the anode section of the electrolysis cell stack;
- supplying the oxygen loaded anolyte withdrawn from the anode section of the electrolysis cell stack to an anolyte cooler to obtain a cooled oxygen loaded anolyte, before supplying the oxygen loaded anolyte to the anolyte gas-liquid separator.

According to the method of the invention, the oxygen loaded anolyte withdrawn from the anode section of the electrolysis cell stack is supplied to an anolyte cooler to obtain a cooled oxygen loaded anolyte, before said oxygen loaded anolyte is supplied to the anolyte gas liquid separator. That is, the oxygen loaded anolyte is cooled downstream of the electrolysis cell stack, in particular downstream of the anode section of the electrolysis cell stack, and upstream of the anolyte gas-liquid separator. Hence, the oxygen loaded anolyte is supplied as cooled anolyte to the anolyte gas-liquid separator.

According to one embodiment of the method, the electrolysis medium is an aqueous medium, in particular an aqueous alkaline medium, in particular an aqueous concentrated potassium hydroxide (KOH) solution with a KOH concentration of up to 30 wt.-%, or up to 35 wt.-%, or up to 40 wt.-%.

According to one further embodiment of the method, the hydrogen depleted catholyte withdrawn from the catholyte gas-liquid separator and/or the oxygen depleted anolyte withdrawn from the anolyte gas-liquid separator is/are not cooled before it is/they are recycled to the electrolysis cell stack.

Cooling of the oxygen loaded anolyte by means of the anolyte cooler alone is sufficient to keep the temperatures of the electrolysis system within the target temperatures. According to one exemplary embodiment, when the electrolysis cell stack is operated at a set point temperature of 90 °C, it is sufficient to cool the oxygen loaded anolyte withdrawn from the anode section of the electrolysis cell stack to 60 °C. After separating the oxygen gas from the cooled loaded anolyte, it may be fully mixed with uncooled catholyte withdrawn from the catholyte gas-liquid separator. The resulting mixed electrolyte has a temperature of 75 °C, which is low enough that it can be recycled to the electrolysis cell stack to generate hydrogen and oxygen again.

According to one embodiment of the method, the hydrogen depleted catholyte withdrawn from the catholyte gas-liquid separator and the oxygen depleted anolyte withdrawn from the anolyte gas-liquid separator are at least partially mixed to obtain a hydrogen and oxygen depleted mixed electrolysis medium, and the hydrogen and oxygen depleted mixed electrolysis medium is recycled to the electrolysis cell stack. According to this embodiment, the oxygen depleted anolyte and the hydrogen depleted catholyte are supplied to the electrolysis cell stack either separated, partially mixed or fully mixed.

According to one embodiment of the method, when the oxygen depleted anolyte and the hydrogen depleted catholyte are supplied to the electrolysis cell stack either partially mixed or fully mixed, the hydrogen and oxygen depleted mixed electrolysis medium is not cooled before it is recycled to the electrolysis cell stack.

### Detailed description of an exemplary embodiment

The invention will now be detailed by way of an exemplary embodiment with reference to the attached drawing. Unless otherwise stated, the drawings are not to scale. In the figure and the accompanying description, equivalent elements are each provided with the same reference marks.

In the drawing

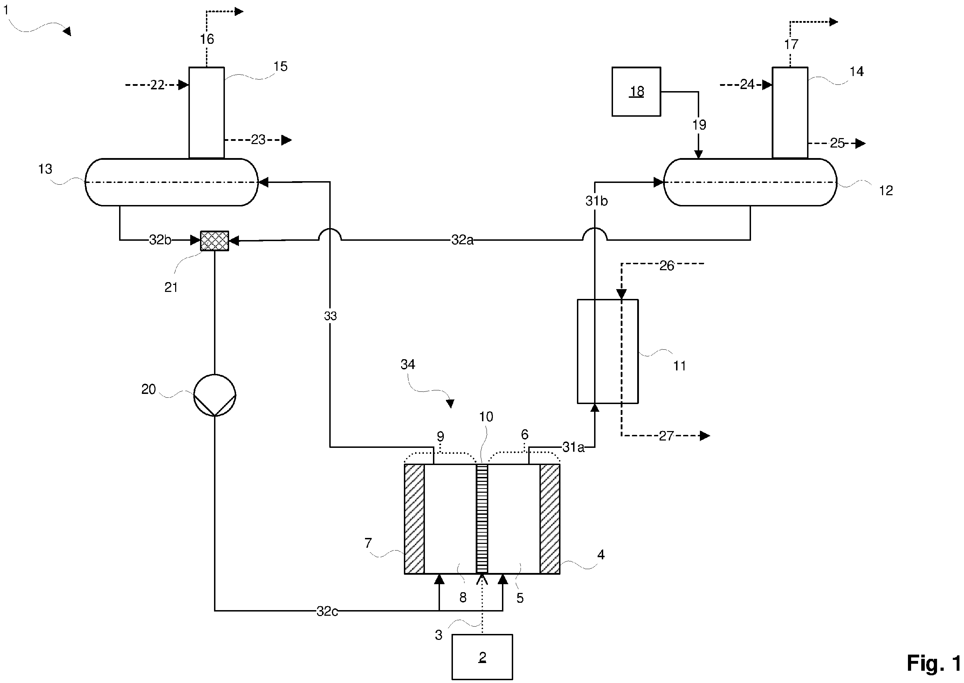

Figure 1    depicts a simplified flow diagram of an electrolysis arrangement 1 according to one exemplary embodiment of the invention.

Figure 1 depicts one exemplary embodiment of an electrolysis arrangement 1 according to the invention. It is assumed that the electrolysis arrangement 1 performs an alkaline type electrolysis with 30 wt.-% KOH lye solution as the electrolyte. The electrolysis arrangement 1 comprises an electrolysis cell stack 34, a rectifier 2, an anolyte cooler 11, an anolyte gas-liquid separator 12 with oxygen cooler 14 and a catholyte gas-liquid separator 13 with hydrogen cooler 15 as the main components. The main components are connected via conduits of a first, second and third piping system. The first piping system comprises the conduits 31a and 31b, the second piping system comprises the conduits 32a, 32b and 32c, and the third piping system comprises conduit 33. Furthermore, the electrolysis arrangement comprises a mixing device 21 in order to mix hydrogen depleted catholyte and oxygen depleted anolyte, an electrolyte pump 20 for circulating the electrolysis medium, and a deionised (DI) water supply 19 to compensate for the amount of water consumed by the electrochemical water splitting reaction.

Direct current 3 is supplied to the electrolysis cell stack 34 by means of the rectifier 2. For the sake of simplification, only one electrolysis cell is shown in regards of electrolysis cell stack 34, but the electrolysis cell stack 34 actually contains a plurality of electrolysis cells. The electrolysis cell shown comprises an anode section 6, which consists of an anode 4 and an anode compartment 5. The electrolysis cell further comprises a cathode section 9, which consists of a cathode 7 and a cathode compartment 8. The anode section 6 and the cathode section 9 are separated by a liquid tight membrane 10 which enables the exchange of hydroxyl ions between the anode section 6 and the cathode section 9.

By supplying direct current 3 to the electrolysis cell stack 34, water of the electrolyte lye solution is split into hydrogen (cathode side) and oxygen (anode side). This results in the generation of an oxygen loaded anolyte in the anode section 6 of the electrolysis cell stack 34 and a hydrogen loaded catholyte in the cathode section 9 of the electrolysis cell stack 34.

The oxygen loaded anolyte generated in the anode section 6 is withdrawn from the electrolysis cell stack 34 via an outlet of the anode section 6 (outlet not shown) and supplied via conduit 31a to an inlet of the anolyte cooler 11 (inlet not shown). In the anolyte cooler 11, which is arranged downstream of the electrolysis cell stack 34 and upstream of the anolyte gas-liquid separator 12, the oxygen loaded anolyte is cooled to a sufficiently low temperature by cooling water 26, which is fed to the anolyte cooler 11 in countercurrent to the flow of the oxygen loaded anolyte. The heated cooling water 27 is withdrawn from the anolyte cooler 11 and is re-cooled by e.g. an air cooler (not shown).

The cooled oxygen loaded anolyte is withdrawn via an outlet of the anolyte cooler 11 (outlet not shown) and supplied via conduit 31b to an inlet of the anolyte gas-liquid separator 12 (inlet not shown). In anolyte gas-liquid separator 12, oxygen gas is separated from the oxygen-loaded anolyte, whereby an oxygen depleted anolyte and oxygen gas is obtained. The oxygen gas still contains uncondensed water. Hence, it is cooled in oxygen cooler 14 by indirect cooling. Therefore, oxygen cooler 14 is supplied with cooling water 24. The thereby condensed water is returned to the anolyte gas-liquid separator 12. Heated cooling water 25 is withdrawn from oxygen cooler 14 and re-cooled by e.g. an air cooler (not shown). Dry oxygen gas 17 is withdrawn from oxygen cooler 14 and fed to a further processing step.

As water is continuously consumed by the water electrolysis process, the electrolysis arrangement 1 comprises a DI water storage tank to compensate for the consumed water and balance the amount of water which is in the process. According to the embodiment of Fig. 1, DI water 19 is supplied from the DI water storage tank 18 to the anolyte gas-liquid separator 12 to be introduced into the electrolysis system.

The hydrogen loaded catholyte generated in the cathode section 9 is withdrawn from the electrolysis cell stack 34 via an outlet of the cathode section 9 (outlet not shown) and supplied via conduit 33 to an inlet of the catholyte gas-liquid separator 13 (inlet not shown). No further cooling device is arranged within conduit 33. In catholyte gas-liquid separator 13, hydrogen gas is separated from the hydrogen loaded catholyte, whereby an hydrogen depleted catholyte and hydrogen gas is obtained. The hydrogen gas still contains uncondensed water. Hence, it is cooled in hydrogen cooler 15 by indirect cooling. Therefore, hydrogen cooler 15 is supplied with cooling water 22. The thereby condensed water is returned to the catholyte gas-liquid separator 13. Heated cooling water 23 is withdrawn from hydrogen cooler 15 and re-cooled by e.g. an air cooler (not shown). Dry hydrogen gas 16 is withdrawn from hydrogen cooler 15 and fed to a further processing step.

Oxygen depleted anolyte is withdrawn from the anolyte gas-liquid separator 12 and supplied via conduit 32a to the mixing device 32b. Hydrogen depleted catholyte is withdrawn from the catholyte gas-liquid separator 13 and supplied via conduit 32b to mixing device 21. In mixing device 21, oxygen depleted anolyte and hydrogen depleted catholyte are fully mixed, whereby a mixed hydrogen and oxygen depleted electrolyte is obtained. The mixed oxygen and hydrogen depleted electrolyte is recycled via conduit 32c to the electrolysis cell stack 34, whereby it is routed to an anode inlet and a cathode inlet after splitting the volume flows in a ratio of one to one. In the electrolysis cell stack 34, the oxygen and hydrogen depleted electrolyte is processed for the renewed splitting of water by the electrolysis reaction. Conduits 32a, 32b and 32c form the second piping system. No further cooling device is arranged within this second piping system.

According to the alkaline electrolysis arrangement 1 of Fig. 1, the electrolysis cell stack 34 is operated at a set temperature of 90 °C. That is, the hydrogen loaded catholyte and the oxygen loaded anolyte are withdrawn from the electrolysis cell stack having a temperature of approximately 90 °C. By the anolyte cooler 11, the oxygen loaded anolyte is cooled down to a temperature of 60 °C. That is, the oxygen loaded anolyte in conduit 31b and the oxygen depleted anolyte of conduit 32a have a temperature of approximately 60 °C. The hydrogen loaded catholyte in conduit 33 and the hydrogen depleted catholyte in conduit 32b have a temperature of approximately 90 °C, as no further cooling device is arranged within the second piping system. In the mixing device 21, hydrogen depleted catholyte having a temperature of approximately 90 °C and oxygen depleted anolyte having a temperature of approximately 60 °C are mixed, which results in a mixed hydrogen and oxygen depleted electrolyte temperature of approximately 75 °C. Hence, the mixed electrolyte is recycled to the electrolysis cell stack 34 having a temperature of approximately 75 °C. In the electrolysis cell stack 34, said mixed electrolyte is again heated to 90 °C as a consequence of the electrolysis reaction within the stack.

The aforementioned scenario is further discussed in detail in the following.

Operating conditions of the alkaline electrolysis arrangement are:

- 30 wt.-% aqueous KOH lye solution as the electrolysis medium;
- The outlet streams of the electrolysis cell stack 34 (conduits 31a and 33) are at 90 °C;
- The allowable temperature difference from inlet to outlet of the electrolysis cell stack 34 is 15 °C;
- The inlet mixed electrolyte stream into the electrolysis cell stack 34 is split 1:1 between the anode section 6 and cathode section 9 (not shown in Fig. 1).

By arranging the electrolyte cooler downstream of the anode section 6 of the cell stack 34, it is possible to reduce the temperature of the stream by twice the amount of temperature increase in the cell stack 34 ($dT_{stack}$). This is not possible when the electrolyte cooler is arranged in conduit 32c since, if one would cool by more than the $dT_{stack}$, one would reduce the operating temperature of the electrolysis arrangement, making it less efficient. The present invention enables to reach these lower temperatures because an electrolyte stream is cooled (i.e. the anolyte stream) which is 50 % of the total electrolyte inlet stream into the cell stack 34. This is shown in the energy balance below.

• Allowable temperature increase in the cell stack for the scenario if Fig. 1 is dTstack = 15 °C

• Total electrolyte flow (anode + cathode side) to maintain temperature increase in cell stack = $V_{total}$

• Electrolyte flow into anode and cathode section (50/50 split),

$$V_{anode} = V_{total} / 2 = V_{cathode}$$

• To maintain a steady operating temperature of the electrolysis arrangement, the heat generated in the cell stack ($Q_{stack}$) has to equal the heat removed from the system ($Q_{cooling}$): $Q_{stack} = Q_{cooling}$

• $Q_{stack}$ and $Q_{cooling}$ equal to a temperature change of the electrolyte in the stack and in the cooler (heat exchanger - HX) respectively:

$$V_{total} * rho_{KOH} * cp_{KOH} * dT_{stack} = V_{anode} * rho_{KOH} * cp_{KOH} * dT_{HX,}$$

wherein $rho_{KOH}$ is the density of the electrolysis medium and $cp_{KOH}$ is the heat capacity of the electrolysis medium

• This can be simplified, since $rho_{KOH}$ and $cp_{KOH}$ can be regarded as being constant with these small temperature differences:

$$V_{total} * dT_{stack} = (V_{total} / 2) * dT_{HX}$$

$$\rightarrow dT_{HX} = 2 * dT_{stack}$$

• For our scenario, this leads to:

$$dT_{HX} = 30 °C$$

$$\rightarrow T_{outlet\ from\ HX} = 60 °C$$

• Since the hydrogen stream is not cooled, it remains at 90 °C, and since it has the same flowrate as the oxygen stream after their mixing upstream the pump, it results:

$$T_{\text{after mixing}} = 75\ °C = T_{\text{inlet to stack}}$$

Reducing the temperature of the oxygen loaded anolyte to 60 °C instead of 90 °C, when the electrolyte cooler would be arranged in conduit 32c, less corrosion resistant materials can be used to still ensure low corrosion rates. For instance, stainless steel can be chosen as a material for conduit 31b, for the housing of anolyte gas-liquid separator 12 and for conduit 32a. In case the electrolyte cooler would be arranged within conduit 32c upstream of the electrolysis cell stack 34, a pure Nickel material would have to be used for the oxygen loaded anolyte carrying conduits and housings. Because in the case, those conduits and housings would be exposed to a temperature of 90 °C.

The solubility of the oxygen gas does not change significantly with temperatures within the aforementioned temperature range (60 °C to 90 °C). For instance, in case of 30 wt.-% KOH at 30 bar, the solubility of oxygen at 90 °C is 56,5 wt.-ppm and for 60 °C it is 56,1 wt.-ppm according to the solubility model and data of Shoor et al., published in 1968 as "Salting out of nonpolar gases in aqueous potassium hydroxide solution".

The anolyte cooler 11 has to handle a two-phase flow (anolyte and gaseous oxygen) and therefore preferably has a straight vertical arrangement preventing any possible dead-spots where oxygen gas can be trapped. The tubing or plating, depending on the heat exchanger type chosen, is made out of corrosion resistant material as it is subject to an anolyte-oxygen mixture under a high temperature. However, these components are easier to manufacture and are available in standardized pieces, making them relatively cheaper than an entire gas-liquid separator made out of the respective corrosion resistant material.

To maintain a 50/50 split at the inlet to the electrolysis cell stack 34, a pressure resistive element can be placed on the cathode section outlet to balance the pressure drop introduced by placing the electrolysis cell stack on the anode outlet stream.

**List of reference signs**

| | |
|---|---|
| 1 | electrolysis arrangement |
| 2 | rectifier |
| 3 | direct current |
| 4 | anode |
| 5 | anode compartment |
| 6 | anode section |
| 7 | cathode |
| 8 | cathode compartment |
| 9 | cathode section |
| 10 | membrane |
| 11 | anolyte cooler |
| 12 | anolyte gas-liquid separator |
| 13 | catholyte gas-liquid separator |
| 14 | oxygen cooler |
| 15 | hydrogen cooler |
| 16 | hydrogen gas |
| 17 | oxygen gas |
| 18 | DI water storage tank |
| 19 | DI water supply |
| 20 | electrolyte pump |
| 21 | mixing device |
| 22 | cooling water hydrogen cooler (in) |
| 23 | cooling water hydrogen cooler (out) |
| 24 | cooling water oxygen cooler (in) |
| 25 | cooling water oxygen cooler (out) |
| 26 | cooling water anolyte cooler (in) |
| 27 | cooling water anolyte cooler (out) |
| 31a, 31b | conduits of first piping system |
| 32a, 32b, 32c | conduits of second piping system |

| 33 | conduit of third piping system |
| 34 | electrolysis cell stack |

**Claims**

1. Electrolysis arrangement (1), comprising

   - an electrolysis cell stack (34) comprising a plurality of electrolysis cells for the electrochemical generation of hydrogen and oxygen from an electrolysis medium, wherein the electrolysis cell stack comprises an anode section (6) for the generation of oxygen and a cathode section (9) for the generation of hydrogen;
   - an anolyte gas-liquid separator (12) for the separation of oxygen gas (17) from an oxygen loaded anolyte portion of the electrolysis medium;
   - a catholyte gas-liquid separator (13) for the separation of hydrogen gas (16) from a hydrogen loaded catholyte portion of the electrolysis medium;
   - an anolyte cooler (11), wherein said anolyte cooler is arranged downstream of the electrolysis cell stack and upstream of the anolyte gas-liquid separator, in order to cool the oxygen loaded anolyte portion of the electrolysis medium before it enters the anolyte gas-liquid separator.

2. Electrolysis arrangement according to claim 1, wherein the electrolysis medium is an aqueous medium, in particular an aqueous alkaline medium, in particular an aqueous concentrated potassium hydroxide (KOH) solution with a KOH concentration of up to 30 wt.-%, or up to 35 wt.-%, or up to 40 wt.-%.

3. Electrolysis arrangement according to claim 1 or 2, wherein the anolyte cooler is arranged within a first piping system (31a, 31b), wherein the first piping system connects an outlet of the anode section of the electrolysis cell stack and an inlet of the anolyte gas-liquid separator.

4. Electrolysis arrangement according to any one of the preceding claims, wherein the electrolysis arrangement comprises a second piping system (32a, 32b, 32c), wherein the second piping system connects an outlet of the anolyte gas-liquid separator and an outlet of the catholyte gas-liquid separator with an inlet of the electrolysis cell stack, in order to withdraw hydrogen depleted catholyte from the catholyte gas-liquid separator and to withdraw oxygen depleted anolyte from the anolyte gas-liquid separator, and to supply the hydrogen depleted catholyte and the oxygen depleted anolyte to the electrolysis cell stack.

5. Electrolysis arrangement according to claim 4, wherein the second piping system comprises a mixing device (21) arranged downstream of the anolyte gas-liquid separator and downstream of the catholyte gas-liquid separator, in order to at least partially mix the hydrogen depleted catholyte and the oxygen depleted anolyte to obtain a mixed hydrogen and oxygen depleted electrolyte, to supply the mixed hydrogen and oxygen depleted electrolyte to the inlet of the electrolysis cell stack.

6. Electrolysis arrangement according to claim 4 or 5, wherein no cooling device is arranged within the second piping system.

7. Electrolysis arrangement according to claim 5, wherein no cooling device is arranged within the second piping system downstream of the mixing device and upstream of the inlet of the electrolysis cell stack.

8. Electrolysis arrangement according to any one of the preceding claims, wherein the electrolysis arrangement comprises a third piping system (33), wherein the third piping system connects an outlet of the cathode section of the electrolysis cell stack and an inlet of the catholyte gas-liquid separator.

9. Electrolysis arrangement according to one of claims 3 to 8, wherein the part of the first piping system connecting an outlet of the anolyte cooler with the inlet of the anolyte gas-liquid separator is made of a stainless steel material.

10. Electrolysis arrangement according to one of the preceding claims, wherein a housing of the anolyte gas-liquid separator is made of a stainless steel material.

11. Electrolysis arrangement according to one of claims 4 to 10, wherein the second piping system as a whole is made of a stainless steel material.

12. Electrolysis arrangement according to any one of the preceding claims, wherein the anolyte cooler is arranged directly at or proximately to the outlet of the anode section of the electrolysis cell stack.

13. A method for producing hydrogen and oxygen by electrolysis of an electrolysis medium, the method comprising the method steps of

- electrochemical splitting of water by means of an electrolysis cell stack (34), whereby a hydrogen loaded catholyte withdrawn from a cathode section (9) of the electrolysis cell stack and an oxygen loaded anolyte withdrawn from an anode section (6) of the electrolysis cell stack is obtained;
- supplying the hydrogen loaded catholyte to a catholyte gas-liquid separator (13) to separate hydrogen from the hydrogen loaded catholyte, whereby hydrogen gas (16) and a hydrogen depleted catholyte is obtained;
- supplying the oxygen loaded anolyte to an anolyte gas-liquid separator (12) to separate oxygen from the oxygen loaded anolyte, whereby oxygen gas (17) and an oxygen depleted anolyte is obtained;
- withdrawing the hydrogen depleted catholyte from the catholyte gas-liquid separator and recycling the hydrogen depleted catholyte to the cathode section of the electrolysis cell stack;
- withdrawing the oxygen depleted anolyte from the anolyte gas-liquid separator and recycling the oxygen depleted anolyte to the anode section of the electrolysis cell stack;
- supplying the oxygen loaded anolyte withdrawn from the anode section of the electrolysis cell stack to an anolyte cooler (11) to obtain a cooled oxygen loaded anolyte, before supplying the oxygen loaded anolyte to the anolyte gas-liquid separator.

14. Method according to claim 13, wherein the electrolysis medium is an aqueous medium, in particular an aqueous alkaline medium, in particular an aqueous concentrated potassium hydroxide (KOH) solution with a KOH concentration of up to 30 wt.-%, or up to 35 wt.-%, or up to 40 wt.-%.

15. Method according to claim 13 or 14, wherein the hydrogen depleted catholyte withdrawn from the catholyte gas-liquid separator and/or the oxygen depleted anolyte withdrawn from the anolyte gas-liquid separator is/are not cooled before it is/they are recycled to the electrolysis cell stack.

16. The method according to one of claims 13 to 15, wherein the hydrogen depleted catholyte withdrawn from the catholyte gas-liquid separator and the oxygen depleted anolyte withdrawn from the anolyte gas-liquid separator are at least partially mixed to obtain a hydrogen and oxygen depleted mixed electrolysis medium, and the hydrogen and oxygen depleted mixed electrolysis medium is recycled to the electrolysis cell stack.

17. The method according to claim 16, wherein the hydrogen and oxygen depleted mixed electrolysis medium is not cooled before it is recycled to the electrolysis cell stack.

Fig. 1

Europäisches
Patentamt

European
Patent Office

Office européen
des brevets

# EUROPEAN SEARCH REPORT

Application Number

EP 21 02 0418

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2021/156036 A1 (KLINK STEFAN [DE] ET AL) 27 May 2021 (2021-05-27)<br>* paragraphs [0078], [0079], [0082], [0083], [0088] *<br>* paragraphs [0095], [0101] *<br>* paragraphs [0128] – [0160]; figure 1 * | 1-8,<br>12-17<br>9-11 | INV.<br>C25B1/04<br>C25B15/08 |
| X<br>Y | CN 101 625 207 A (BEIJING HEHUA ANJI ELECTRONICS) 13 January 2010 (2010-01-13)<br>* abstract; claim 1 * | 1,2,8-12<br>9-11 | |
| A | EP 3 657 095 A1 (GREEN VISION HOLDING BV [NL]) 27 May 2020 (2020-05-27)<br>* paragraph [0027] *<br>* abstract * | 1,13 | |
| A | US 2015/038741 A1 (PEDERSEN FRIIS CLAUS [DK] ET AL) 5 February 2015 (2015-02-05)<br>* paragraphs [0036], [0037] *<br>* paragraph [0091] * | 1,13 | TECHNICAL FIELDS<br>SEARCHED (IPC)<br><br>C25B |

The present search report has been drawn up for all claims

| Place of search | Date of completion of the search | Examiner |
|---|---|---|
| Munich | 4 February 2022 | Desbois, Valérie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 137 607 A1**

## ANNEX TO THE EUROPEAN SEARCH REPORT
## ON EUROPEAN PATENT APPLICATION NO.

EP 21 02 0418

04-02-2022

| Patent document cited in search report | | Publication date | Patent family member(s) | | Publication date |
|---|---|---|---|---|---|
| US 2021156036 | A1 | 27-05-2021 | CA | 3099872 A1 | 05-12-2019 |
| | | | CN | 112292483 A | 29-01-2021 |
| | | | DE | 102018208624 A1 | 05-12-2019 |
| | | | EP | 3802918 A2 | 14-04-2021 |
| | | | JP | 2021525315 A | 24-09-2021 |
| | | | US | 2021156036 A1 | 27-05-2021 |
| | | | WO | 2019229019 A2 | 05-12-2019 |
| CN 101625207 | A | 13-01-2010 | NONE | | |
| EP 3657095 | A1 | 27-05-2020 | NONE | | |
| US 2015038741 | A1 | 05-02-2015 | AR | 090224 A1 | 29-10-2014 |
| | | | AU | 2013229699 A1 | 25-09-2014 |
| | | | CA | 2866312 A1 | 12-09-2013 |
| | | | CL | 2014002343 A1 | 26-12-2014 |
| | | | CN | 104220645 A | 17-12-2014 |
| | | | DK | 2823087 T3 | 23-08-2021 |
| | | | EA | 201491624 A1 | 31-03-2015 |
| | | | EP | 2823087 A2 | 14-01-2015 |
| | | | ES | 2877849 T3 | 17-11-2021 |
| | | | JP | 6192669 B2 | 06-09-2017 |
| | | | JP | 2015513615 A | 14-05-2015 |
| | | | KR | 20140138193 A | 03-12-2014 |
| | | | TW | 201402870 A | 16-01-2014 |
| | | | US | 2015038741 A1 | 05-02-2015 |
| | | | WO | 2013131778 A2 | 12-09-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHOOR et al.** *Salting out of nonpolar gases in aqueous potassium hydroxide solution,* 1968